# EUROPEAN PATENT APPLICATION

(11) **EP 4 470 667 A1**
(43) Date of publication of application: **04.12.2024**
(21) Application number: 23883138.2
(22) Date of filing: 26.10.2023
(51) Int. Cl.: B01J 23/847, B01J 21/06, B01J 21/04, B01J 35/00, B01J 37/00, B01J 37/08, B01J 37/02, C01B 32/162

(54) **CATALYST FOR PRODUCING CARBON NANOTUBES, AND METHOD FOR PRODUCING CATALYST**

(30) Priority: 28.10.2022 KR 20220141853
(71) Applicant: LG Chem, Ltd., Yeongdeungpo-gu Seoul 07336 (KR)
(72) Inventor: KIM, Sung Jin, Daejeon 34122 (KR); KIM, Se Hyun, Daejeon 34122 (KR); OH, Eu Gene, Daejeon 34122 (KR); GIM, Min Yeong, Daejeon 34122 (KR)
(74) Representative: Goddar, Heinz J.
(86) International application number: PCT/KR2023/016775
(87) International publication number: WO 2024/091033

(57) **Abstract**

The present invention relates to a novel catalyst for producing carbon nanotubes, capable of synthesizing carbon nanotubes with a high specific surface area in a satisfactory yield, and a method for producing the catalyst.

## Description

### [TECHNICAL FIELD]

### Cross-reference to Related Application

This application claims the benefit of priority to Korean Patent Application No. 10-2022-0141853 filed on October 28, 2022, the disclosure of which is incorporated herein by reference in its entirety.

### Technical Field

The present invention relates to a catalyst capable of synthesizing carbon nanotubes having a large specific surface area, and a method for producing the same.

### [BACKGROUND ART]

Depending on the shape of the material, carbon nanomaterials include fullerene, carbon nanotube (CNT), graphene, and graphite nano plate. Among them, the carbon nanotube is a macromolecule in which a hexagonal honeycomb-shaped graphite surface, in which one carbon atom is bonded to three other carbon atoms, is rolled up into a nano-sized diameter.

The carbon nanotube is hollow and light, and has electrical conductivity as good as copper, thermal conductivity as good as diamond, and tensile strength as good as steel. Depending on the rolled form, it is also classified into single-walled carbon nanotube (SWCNT), multi-walled carbon nanotube (MWCNT), and rope carbon nanotube.

Recently, the area where the most active research is being conducted on the use of carbon nanotubes is in the field of lithium secondary batteries. The ultimate goal of the lithium secondary batteries is to store more electrical energy in a smaller size. As one of the methods for manufacturing an electrode having a higher energy density per unit volume by improving the electrode density of the lithium secondary battery, a method of applying the carbon nanotubes as a conductive material is being studied. In general, since high-density electrodes are formed by molding electrode active material particles having a size of several µm to several tens of µm by a high-pressure press, it is easy that the particles are deformed during the molding process, the space between the particles is reduced, and electrolyte permeability is reduced. To solve this problem, a material with excellent electrical conductivity and strength is used as a conductive material when manufacturing the electrodes. Carbon nanotubes are also widely used as the conductive material because they have excellent strength and electrical conductivity. When the conductive material is used in manufacturing the electrode, the conductive material is dispersed between the compressed electrode active materials to maintain micropores between the active material particles, thereby facilitating penetration of an electrolyte, and reducing resistance within the electrode due to excellent conductivity.

However, when using carbon nanotubes as a conductive material, the most problematic is the low solubility and dispersibility of the carbon nanotubes themselves. The carbon nanotubes have a problem in that they do not achieve a stable dispersion in an aqueous solution due to strong van der Waals attraction between them and agglomeration occurs. If the carbon nanotubes aggregate in the dispersion, the processability of the dispersion deteriorates and the dispersion cannot be applied uniformly. Therefore, it is preferable to apply the dispersion in a state in which the viscosity of the dispersion is minimized.

As a method for improving the poor dispersibility of the carbon nanotube dispersions, various methods are known. For example, there has been proposed a method of dispersing carbon nanotubes in a dispersion medium through mechanical dispersion treatment such as ultrasonic treatment. However, in the case of this method, the dispersibility is excellent while ultrasonic waves are being irradiated, but the carbon nanotubes begin to aggregate immediately after the ultrasonic irradiation is terminated, and even when the concentration of carbon nanotubes is higher than a certain level, there is also a problem that the carbon nanotubes quickly aggregate. In addition, methods for dispersing and stabilizing carbon nanotubes using various dispersants have been proposed, but these methods also have the problem that it is difficult to suppress an increase in viscosity that may occur when the carbon nanotubes are dispersed at a high concentration in a dispersion medium.

Therefore, it is necessary to manufacture a novel carbon nanotube in which the dispersibility can be further enhanced by improving the properties of the carbon nanotube itself, rather than by mechanical dispersion treatment such as ultrasonic treatment or auxiliary means such as the use of dispersants.

### Prior Art Literature

(Patent Document 1) KR 10-2017-0031061 A (published on March 20, 2017)

### [DISCLOSURE]

### [TECHNICAL PROBLEM]

An object of the present invention is to provide a novel catalyst for producing carbon nanotubes, wherein the catalyst is capable of preparing a carbon nanotube having a large specific surface area and thus excellent conductive properties, and a method for producing the catalyst.

### [TECHNICAL SOLUTION]

In order to solve the above problems, the present invention provides a catalyst for producing carbon nanotubes, and a method for producing the same.

Specifically, (1) the present invention provides a catalyst for producing carbon nanotubes, the catalyst comprising: a boehmite support, and a main catalyst component, a cocatalyst component and Zr supported on the support.

(2) The present invention provides the catalyst for producing carbon nanotubes according to (1) above, wherein the boehmite support has a number average particle size of 20 to 100 µm.

(3) The present invention provides the catalyst for producing carbon nanotubes according to (1) or (2) above, wherein the main catalyst component is at least one selected from the group consisting of Ni, Co, and Fe.

(4) The present invention provides the catalyst for producing carbon nanotubes according to any one of (1) to (3) above, wherein the cocatalyst component is at least one selected from the group consisting of Mo and V.

(5) The present invention provides the catalyst for producing carbon nanotubes according to any one of (1) to (4) above, wherein the molar ratio between the main catalyst component and the Zr is 1:0.01 to 1:0.1.

(6) The present invention provides the catalyst for producing carbon nanotubes according to any one of (1) to (5) above, wherein the molar ratio between the main catalyst component and the cocatalyst component is 1:0.01 to 1:0.2.

(7) The present invention provides the catalyst for producing carbon nanotubes according to any one of (1) to (6) above, wherein the content of the main catalyst component is 5 to 20% by weight based on the total weight of the catalyst.

(8) The present invention provides a method of preparing a catalyst for producing carbon nanotubes, the method including the steps of: preparing a catalyst composition by adding a main catalyst precursor, a cocatalyst precursor, a Zr precursor, and a multicarboxylic acid to a solvent (S1); and adding a boehmite support to the catalyst composition, and drying and calcining it to obtain a catalyst (S2).

(9) The present invention provides the method of preparing a catalyst for producing carbon nanotubes according to (8) above, wherein the molar ratio between the main catalyst precursor and the multicarboxylic acid added in step (S1) is 1:0.01 to 1:0.1.

(10) The present invention provides the method of preparing a catalyst for producing carbon nanotubes according to (8) or (9) above, wherein the calcination is performed at 300 to 720°C.

### [ADVANTAGEOUS EFFECTS]

Carbon nanotubes synthesized with the catalyst of the present invention have a large specific surface area, and thus can provide more excellent electrical conductivity even with the same content when applied as a conductive material.

### [BEST MODES OF THE INVENTION]

Hereinafter, the present invention will be described in more detail.

The terms or words used in the specification and claims of the present application should not be construed as being limited to their ordinary or dictionary meanings, but should be interpreted as meanings and concepts consistent with the technical spirit of the present invention, based on the principle that the inventor may adequately define the concepts of terms to best describe his invention.

The term 'carbon nanotube' used in the present invention is a secondary structure formed by gathering units of carbon nanotubes to form a bundle entirely or partially, wherein the carbon nanotube unit has a graphite sheet in the shape of a cylinder with a nano-sized diameter, and has a sp2 bond structure. In this case, the characteristics of a conductor or semiconductor may appear depending on the angle and structure in which the graphite surface is rolled. Depending on the number of bonds forming the wall, the carbon nanotube unit may be divided into single-walled carbon nanotube (SWCNT), double-walled carbon nanotube (DWCNT), and multi-walled carbon nanotube (MWCNT), wherein the thinner the wall thickness, the lower the resistance.

The carbon nanotubes of the present invention may include one or more of single-walled, double-walled, and multi-walled carbon nanotube units.

### CATALYST FOR THE PRODUCTION OF CARBON NANOTUBES

The present invention relates to a novel catalyst for producing carbon nanotubes, wherein the catalyst is capable of producing carbon nanotubes having a high specific surface area by using boehmite as a support and supporting Zr together with a main catalyst component and a cocatalyst component. More specifically, the present invention provides a catalyst for producing carbon nanotubes, the catalyst comprising: a boehmite support, and a main catalyst component, a cocatalyst component and Zr supported on the support.

Hereinafter, each component of the catalyst for producing carbon nanotubes according to the present invention will be described separately.

### Support

The catalyst for producing carbon nanotubes of the present invention uses boehmite as a support. The boehmite is an aluminum-based support expressed as γ-AlOP(OH), and allows the main catalyst component and cocatalyst component to be uniformly supported through a hydroxyl group on the surface. In particular, when the boehmite support is used and Zr is supported together with the main catalyst component and the cocatalyst component as described later, the specific surface area of the finally prepared carbon nanotube can be increased due to the interaction between the boehmite support and the Zr component.

Meanwhile, the number average particle size of the boehmite may be 20 to 100 µm, and preferably 40 to 60 µm. When the number average particle size of the boehmite is within the above-mentioned ranges, cocatalyst and main catalyst components to be described later can be efficiently supported, and carbon nanotubes produced with the catalyst can have a large specific surface area.

In addition, the boehmite may have a specific surface area of 150 to 250 m²/g, preferably 170 to 220 m²/g. The boehmite may have a bulk density of 500 to 1200 kg/m³, preferably 700 to 1000 kg/m³. When the properties of the boehmite are within the above-mentioned range, there is a technical advantage in that the durability of the support is excellent, and a large amount of metal components can be supported without difficulty.

The shape of the boehmite is not particularly limited, but may be spherical or potato-shaped. Additionally, the boehmite may have a porous structure, molecular sieve structure, honeycomb structure, etc. to have a relatively high surface area per unit mass or unit volume.

### Main catalyst component

In the catalyst for producing carbon nanotubes of the present invention, the main catalyst component may be one or more selected from the group consisting of Ni, Co, and Fe, and preferably Co. The main catalyst component serves to facilitate the carbon nanotube synthesis reaction by directly lowering the activation energy of the reaction in which the carbon nanotubes are synthesized from the carbon source gas. When the main catalyst component described above is used, it is desirable in that the activity of the manufactured catalyst can be high and durability can also be secured at a certain level or higher.

In the catalyst for producing carbon nanotubes of the present invention, the content of the main catalyst component may be 5 to 20% by weight, preferably 8 to 15% by weight. As the content of the main catalyst component increases, the amount of carbon nanotubes obtained relative to the weight of the catalyst used may increase. However, even if the amount of carbon nanotubes obtained is large, the specific surface area of individual carbon nanotubes decreases. Therefore, if the content of the main catalyst component in the catalyst is excessively high, carbon nanotubes with the desired properties may not be obtained. On the other hand, if the content of the main catalyst component is excessively low, the carbon nanotube synthesis reaction itself may not be performed smoothly.

### Cocatalyst component

In the catalyst for producing carbon nanotubes of the present invention, the cocatalyst component may be one or more selected from the group consisting of Mo and V, and preferably V. The cocatalyst component plays a role in further increasing the catalytic activity of the main catalyst component. When the cocatalyst component described above is used, the synergy effect with the main catalyst component can be excellent, and agglomeration between the main catalyst components during the manufacturing process can be prevented.

In the catalyst for producing carbon nanotubes of the present invention, the molar ratio between the main catalyst component and the cocatalyst component may be 1:0.01 to 1:0.2. By setting the ratio between the main catalyst component and the cocatalyst component within the above-mentioned range, sufficient catalytic activity can be achieved with the synergistic effect between the main catalyst component and the cocatalyst component without having to increase the main catalyst content more than necessary, and both the yield and specific surface area of carbon nanotubes can be maintained at excellent levels.

### Zirconium

The catalyst for producing carbon nanotubes of the present invention supports Zr as a metal additive along with the main catalyst component and cocatalyst component described above. In the case of conventional supported catalysts for producing carbon nanotubes, a two-component catalyst system of the main catalyst and cocatalyst components described above was used with high frequency. In the case of such a two-component catalyst system, it has the advantage of being relatively easy to manufacture the catalysts and being particularly suitable for mass production, but there is a limitation in that it is difficult to increase the properties, especially the specific surface area, of the carbon nanotubes prepared with the catalyst above a certain level. In the present invention, it was confirmed that when boehmite is applied as a catalyst support and Zr is used as a metal additive, the specific surface area of the obtained carbon nanotubes can be increased without significant loss in terms of other properties, while maintaining the advantages of the existing two-component catalyst system.

The Zr may be supported along with the main catalyst and cocatalyst components in the catalyst manufacturing step, and then undergo a drying and calcination process, and thus may exist in the form of an oxide in the catalyst. The Zr may be included in the catalyst such that the molar ratio between the main catalyst component and the Zr is 1:0.01 to 1:0.1, and particularly preferably 1:0.02 to 1:0.08. When the Zr content in the catalyst is within the above-mentioned range, the effect of improving the specific surface area of carbon nanotubes can be maximized.

### Method for preparing catalyst for the production of carbon nanotube

The present invention provides a method for producing the catalyst for producing carbon nanotubes described above. Specifically, the present invention provides a method of preparing a catalyst for producing carbon nanotubes, the method including the steps of: preparing a catalyst composition by adding a main catalyst precursor, a cocatalyst precursor, a Zr precursor, and a multicarboxylic acid to a solvent (S1); and adding a boehmite support to the catalyst composition, and drying and calcining it to obtain a catalyst (S2).

Hereinafter, each step of the above manufacturing method will be described separately.

### Step of preparing catalyst composition (S1)

The main catalyst precursor used in this step is a component for introducing the main catalyst component into the catalyst described above, and may be a compound containing the main catalyst component. More specifically, the main catalyst precursor may be a salt or oxide of Fe, Ni and Co, or a compound containing the metal components, and particularly preferably, may be Fe-, Ni- or Co-based precursors such as Fe(NO₃)₂·6H₂O, Fe(NO₃)₂·9H₂O, Fe(NO₃)₃, Fe(OAc)₂, Ni(NO₃)₂·6H₂O, Co(NO₃)₂·6H₂O, Co₂(CO)₈, [Co₂(CO)₆(t-BuC=CH)], Co(OAc)₂.

The cocatalyst precursor used in this step is a component for introducing the cocatalyst component into the catalyst described above, and may be a compound containing the cocatalyst component. The cocatalyst precursor may also be a salt or oxide of V and Mo, or a compound containing the metal components, and particularly preferably, may be a material such as NH₄VO₃, (NH₄)₆Mo₇O₂₄·4H₂O, Mo(CO)₆, or (NH₄)MoS₄. When the materials exemplified above are used as the precursor, there is an advantage in that the main catalyst component and the cocatalyst component are smoothly supported.

Meanwhile, similar to the molar ratio of the main catalyst component to the cocatalyst component in the catalyst, the ratio between the main catalyst precursor and the cocatalyst precursor in the catalyst composition may be 1:0.01 to 1:0.2.

The Zr precursor is dissolved in the catalyst composition together with the main catalyst precursor and cocatalyst precursor described above, supported together, and then subjected a calcination process to form Zr oxide. As the Zr precursor, one or more selected from the group consisting of ZrO(NO₃)₂·xH₂O, Zr(NO₃)₄, Zr(OH)₄, and ZrCl₄ may be used. The Zr precursors listed above can be easily dissolved and easily supported in boehmite pores.

The multicarboxylic acid may be, for example, a multicarboxylic acid, which is a compound containing two or more carboxyl groups, and has high solubility as a complexing agent, inhibits precipitation, facilitates the synthesis of catalysts, and acts as an activator to increase the synthesis of carbon nanotubes. The multicarboxylic acid may be one or more selected from dicarboxylic acid, tricarboxylic acid, and tetracarboxylic acid. For example, carboxylic acid compounds such as citric acid, oxalic acid, malonic acid, succinic acid or tartaric acid, or anhydrides thereof may be used.

The multicarboxylic acid may be added in an amount such that the molar ratio between the main catalyst precursor and the multicarboxylic acid is 1:0.01 to 1:0.1, preferably 1:0.03 to 1:0.05, based on the amount of the main catalyst precursor. Within the added amount range of the multicarboxylic acid as described above, precipitation of metal components of the main catalyst and cocatalyst in the catalyst composition does not occur, and the occurrence of cracks during the subsequent calcination process can also be suppressed.

The solvent of the catalyst composition is not particularly limited as long as it can dissolve the main catalyst precursor and cocatalyst precursor described above, and for example, water is preferably used.

In the method for producing a catalyst for producing carbon nanotubes according to the present invention, it may further include a step of mixing the catalyst composition and aging it for a certain period of time before adding the boehmite to the prepared catalyst composition. Specifically, the mixing may be performed by rotation or stirring at a temperature of 45°C to 80°C. The aging may be performed for 3 to 60 minutes.

### Drying and calcining step (S2)

The Boehmite as a support can be added to the catalyst composition prepared through the previous step so that the main catalyst, cocatalyst and Zr are supported in the support. Then, through a drying and calcining process, the main catalyst precursor, cocatalyst precursor and Zr precursor may be converted into main catalyst oxide, cocatalyst oxide and Zr oxide.

The drying in this step may be performed at 60°C to 200°C for 4 to 16 hours, and the drying method may be a conventional drying method applied in the art, such as oven drying, reduced pressure drying, and freeze drying.

The calcination in this step may be performed at a temperature of 300 to 720°C, preferably 400°C to 690°C. When the calcination is performed in the above temperature range, most of the main catalyst precursor and cocatalyst precursor can be converted into the main catalyst component and cocatalyst component while minimizing structural collapse of the boehmite, which is a support.

Hereinafter, the present invention will be described in more detail by way of examples and experimental examples to specifically illustrate the present invention, but the present invention is not limited to these examples and experimental examples. However, the examples according to the present invention may be modified in various different forms, and the scope of the present invention should not be construed as being limited to the examples described in detail below. The examples of the present invention are provided to explain the present invention more completely to those skilled in the art.

### Example 1

13.1 g of Co(NO₃)₂·6H₂O, 0.53 g of NH₄VO₃, and 0.52 g of ZrO(NO₃)₂·xH₂O were dissolved in 20 g of water, and 0.38 g of anhydrous citric acid was dissolved with multicarboxylic acid to prepare a catalyst composition. The catalyst composition was sufficiently stirred, and then added to boehmite as a support. Afterwards, it was dried at 120°C for 5 hours using an oven, and then calcined at 685°C for 1 hours to obtain a catalyst. The Co content in the catalyst obtained in Example 1 was 11.8% by weight, the molar ratio between Co and V was 1:0.1, and the molar ratio between Co and Zr was 1:0.05.

### Comparative Example 1

A catalyst was obtained in the same manner as in Example 1, except that 0.58 g of Mg(NO₃)₂·6H₂O was used instead of the Zr precursor. The Co content and the molar ratio between Co and V in Catalyst 1 obtained in Comparative Example 1 are the same as in Example 1, and the molar ratio between Co and Mg is also 1:0.05.

### Comparative Example 2

A catalyst was obtained in the same manner as in Example 1, except that 0.67 g of Zn(NO₃)₂·6H₂O was used instead of the Zr precursor. The Co content and the molar ratio between Co and V in Catalyst 1 obtained in Comparative Example 1 are the same as in Example 1, and the molar ratio between Co and Zn is also 1:0.05.

### Comparative Example 3

A catalyst was obtained in the same manner as in Example 1, except that 0.53 g of Ca(NO₃)₂·6H₂O was used instead of the Zr precursor. The Co content and the molar ratio between Co and V in Catalyst 1 obtained in Comparative Example 1 are the same as in Example 1, and the molar ratio between Co and Ca is also 1:0.05.

### Example 2

The same procedure as in Example 1 was carried out except that 0.35 g of NH₄VO₃, 0.13 g of ZrO(NO₃)₂·xH₂O, and 0.25 g of anhydrous citric acid were used. The Co content in Catalyst 2 obtained in Example 2 was 11.4% by weight, the molar ratio between Co and V was 1:0.066, and the molar ratio between Co and Zr was 1:0.0125.

### Example 3

The same procedure as in Example 1 was carried out except that 0.35 g of NH₄VO₃, 0.26 g of ZrO(NO₃)₂·xH₂O, and 0.25 g of anhydrous citric acid were used. The Co content in Catalyst 2 obtained in Example 2 was 11.4% by weight, the molar ratio between Co and V was 1:0.066, and the molar ratio between Co and Zr was 1:0.025.

### Example 4

The same procedure as in Example 1 was carried out except that 0.35 g of NH₄VO₃, 0.47 g of ZrO(NO₃)₂·xH₂O, and 0.25 g of anhydrous citric acid were used. The Co content in Catalyst 2 obtained in Example 2 was 11.4% by weight, the molar ratio between Co and V was 1:0.066, and the molar ratio between Co and Zr was 1:0.045.

### Example 5

The same procedure as in Example 1 was carried out except that 0.35 g of NH₄VO₃, 0.52 g of ZrO(NO₃)₂·xH₂O, and 0.25 g of anhydrous citric acid were used. The Co content in Catalyst 2 obtained in Example 2 was 11.4% by weight, the molar ratio between Co and V was 1:0.066, and the molar ratio between Co and Zr was 1:0.050.

### Example 6

The same procedure as in Example 1 was carried out except that 0.35 g of NH₄VO₃, 0.62 g of ZrO(NO₃)₂·xH₂O, and 0.25 g of anhydrous citric acid were used. The Co content in Catalyst 2 obtained in Example 2 was 11.4% by weight, the molar ratio between Co and V was 1:0.066, and the molar ratio between Co and Zr was 1:0.060.

The types of metal additives, Co content, Co:V molar ratio, and ratio between Co and metal additives in the catalysts obtained in the examples and comparative examples are summarized in Table 1 below. Meanwhile, M in Table 1 below refers to a metal additive.

**[Table 1]**

| | Co content (% by weight) | Co:V molar ratio | Metal additive | Co:M molar ratio |
|---|---|---|---|---|
| Example 1 | 11.8 | 1:0.1 | Zr | 1:0.05 |
| Comparative Example 1 | | | Mg | |
| Comparative Example 2 | | | Zn | |
| Comparative Example 3 | | | Ca | |
| Example 2 | 11.4 | 1:0.066 | Zr | 1:0.0125 |
| Example 3 | | | | 1:0.025 |
| Example 4 | | | | 1:0.045 |
| Example 5 | | | | 1:0.050 |
| Example 6 | | | | 1:0.060 |

### Experimental Example 1. Confirmation of properties of carbon nanotubes produced with catalysts of Examples/Comparative Examples

Carbon nanotubes were synthesized using the catalysts prepared in the above Examples and Comparative Examples. Specifically, after 0.1 g of the prepared catalyst was filled in the fixed bed reactor, nitrogen gas was injected into the fixed bed reactor at 100 sccm, and the temperature inside the fixed bed reactor was heated to the reaction temperature. Then, ethylene as a carbon source gas, and hydrogen gas as a reducing gas were injected at 100 sccm, and the reaction was continued for 60 minutes to synthesize carbon nanotubes. The yield, specific surface area, and bulk density of the synthesized carbon nanotubes were measured, and each property was measured using the method below.
1) Yield was calculated by measuring the weight of the carbon nanotubes obtained through the reaction and using the following formula.
   Yield = {(weight of recovered carbon nanotubes - weight of added catalyst)/(weight of added catalyst)}
2) Specific surface area was measured by a standard measurement method using Microtrac's Trista 2000.
3) Bulk density was calculated by measuring the weight of carbon nanotubes contained in a container in free fall using a 25ml SUS measuring cup and dividing the measured weight by the volume of the container.

The measured results are summarized in Table 2 below.

**[Table 2]**

| | Yield (fold) | Specific surface area (m²/g) | Bulk density (kg/m³) |
|---|---|---|---|
| Example 1 | 18.4 | 315 | 29 |
| Comparative Example 1 | 18.4 | 275 | 31 |
| Comparative Example 2 | 23.5 | 270 | 35 |
| Comparative Example 3 | 15.4 | 275 | 27 |
| Example 2 | 19.0 | 327 | 30 |
| Example 3 | 19.1 | 337 | 31 |
| Example 4 | 19.2 | 345 | 32 |
| Example 5 | 18.8 | 330 | 30 |
| Example 6 | 18.5 | 315 | 29 |

As can be seen in Table 2, when Zr is applied as a metal additive, the specific surface area of the finally produced carbon nanotubes is 300 m²/g or more, confirming that carbon nanotubes with a high specific surface area can be synthesized. On the other hand, in the case of Comparative Examples 1 to 3 in which other kinds of metals were used as additives, carbon nanotubes having a lower specific surface area compared to the present invention were synthesized. In particular, in the case of Comparative Example 2 using the Zn additive, the yield was confirmed to be high, but the specific surface area was confirmed to be the lowest. From this, it was confirmed that the use of Zr has the effect of increasing the specific surface area of the synthesized carbon nanotubes.

Furthermore, it was confirmed that in the case of Examples 2 to 6 with different Zr contents, carbon nanotubes having a high specific surface area were produced in almost all Zr content ranges, and in particular, considering only the specific surface area of carbon nanotubes, carbon nanotubes with a particularly high specific surface area were synthesized at a Co:M molar ratio in the range of 1:0.02 to 1:0.05.

## Claims

1. A catalyst for producing carbon nanotubes, the catalyst comprising:
a boehmite support; and
a main catalyst component, a cocatalyst component and Zr supported on the support.

2. The catalyst for producing carbon nanotubes according to claim 1, wherein the boehmite support has a number average particle size of 20 to 100 µm.

3. The catalyst for producing carbon nanotubes according to claim 1, wherein the main catalyst component is at least one selected from the group consisting of Ni, Co, and Fe.

4. The catalyst for producing carbon nanotubes according to claim 1, wherein the cocatalyst component is at least one selected from the group consisting of Mo and V.

5. The catalyst for producing carbon nanotubes according to claim 1, wherein the molar ratio between the main catalyst component and the Zr is 1:0.01 to 1:0.1.

6. The catalyst for producing carbon nanotubes according to claim 1, wherein the molar ratio between the main catalyst component and the cocatalyst component is 1:0.01 to 1:0.2.

7. The catalyst for producing carbon nanotubes according to claim 1, wherein the content of the main catalyst component is 5 to 20% by weight based on the total weight of the catalyst.

8. A method of preparing a catalyst for producing carbon nanotubes, the method including the steps of:
preparing a catalyst composition by adding a main catalyst precursor, a cocatalyst precursor, a Zr precursor, and a multicarboxylic acid to a solvent (S1); and
adding a boehmite support to the catalyst composition, and drying and calcining it to obtain a catalyst (S2).

9. The method of preparing a catalyst for producing carbon nanotubes according to claim 8, wherein the molar ratio between the main catalyst precursor and the multicarboxylic acid added in step (S1) is 1:0.01 to 1:0.1.

10. The method of preparing a catalyst for producing carbon nanotubes according to claim 8, wherein the calcination is performed at 300 to 720°C.
